# EUROPEAN PATENT SPECIFICATION

(11) **EP 1 862 712 B1**
(45) Date of publication and mention of the grant of the patent: **06.01.2010**
(21) Application number: 07251924.2
(22) Date of filing: 10.05.2007
(51) Int. Cl.: F16K 11/085, F16K 47/06

(54) **Mixing valve and mixing device**
Mischventil und Mischvorrichtung
Valve et dispositif de mélange

(30) Priority: 02.06.2006 NZ 54765606
(43) Date of publication of application: 05.12.2007
(73) Proprietor: Emech Control Limited, Auckland 1061 (NZ)
(72) Inventor: Bilyard, James Raymond, Campbells Bay, Auckland (NZ)
(74) Representative: Jones, Graham Henry

(56) References cited:
- EP-A- 0 909 910
- EP-A- 0 928 916
- EP-A1- 0 309 738
- DE-A1-102004 040 423
- GB-A- 1 173 662

## Description

### FIELD OF THE INVENTION

This invention relates to a mixing valve, and in particular, but not exclusively to a mixing valve for controlling water temperature, and to a mixing device for use in a mixing valve.

### BACKGROUND

Mixing valves are used in a number of situations, for example, for washing or to fill tanks with water at a particular temperature. For some manufacturing processes it can be very important to avoid even relatively small temperature variations. For example the tanning industry requires even temperatures within a vat to prevent the occurrence of hide colour variations.

GB-A-1173662 discloses a by-pass valve for mixing and controlling fluid flow from two opposite ports of a valve body to one or two outlet ports of the body mounted intermediate the first mentioned parts by news of a rotatable slide. The opposite ports are adapted respectively to receive hot liquid and cold liquid.

Feedback control systems are often used to control mixing valves to ensure a constant temperature output even when pressure or temperature variations occur in the supplied hot or cold water. These feedback control systems require the use of temperature sensors in the outlet pipework. The sensors cannot be placed too near the mixing valves as it is important to allow the hot and cold water to mix thoroughly prior to measuring the temperature.

However, the distance of the sensors away from the mixing valves produces a lag in the control response time, sometimes called transport lag. To minimise this lag it is desirable to place the sensors as close as possible to the mixing valve.

In practice it is often not practical to place the sensors closer than approximately ten to twelve pipe diameters from the mixing valve to ensure that the sensors can sense adequately mixed fluid. This reasonably significant distancing of the feedback sensor, from the valve that is being controlled, means that the resulting transport lag is not inconsequential. This can have a direct effect on the response time of the valve, to changes in input parameters, for example to a change in the temperature or pressure of one of the inlet fluids.

Also, to minimise response times it is advantageous to use a valve having an adequately powerful and yet accurately controllable actuator. Similarly it is advantageous if the operating torque requirements of the valve, and/or the effects of Contaminant build-ups, can be minimised, to avoid any sticking or stalling, or to allow accurate valve positioning.

In a retrofit situation it is often difficult to obtain a replacement mixing valve that can be fitted without the need for major rework of the surrounding pipework. While many mixing valves are fitted at the centre of a "T" junction, the configuration or placement of the two inlets and the outlet will differ between installations.

### OBJECT

It is therefore an object of the present invention to provide a mixing valve which will at least go some way towards overcoming the above mentioned problems, or at least provide the public with a useful choice.

### STATEMENTS OF THE INVENTION

Accordingly, in a first aspect, the invention may broadly be said to consist in an in valve mountable mixing device, the device being configured to fit within an outlet port of a mixing valve and to positively engage with the mixing valve to prevent rotation of the mixing device within the valve when mounted, and having one or more vanes adapted to induce swirl into a fluid passing through the outlet port, characterised in that the vanes are each supported on a cross member and by curved shrouds, the cross member divides flow through the mixing device into two flow paths, one that is influenced primarily by a first vane and another that is influenced by a second vane.

Preferably the mixing device includes at least one lug or recess that is adapted to engage with at least one corresponding recess or lug of the valve to prevent rotation of the mixing device when mounted.

Preferably the mixing device includes a flange which is adapted to engage with, or be retained by, a flange, or outlet end, of the outlet port of the valve.

Preferably the mixing device includes one or more vanes configured to induce swirl in a fluid passing through the outlet valve.

Preferably the mixing device includes two or more vanes, and each vane is configured to induce swirl in the same swirl direction.

Optionally the mixing device includes two vanes, a first vane configured to induce swirl in a clockwise direction and a second vane configured to induce swirl in an anticlockwise direction. In a second aspect, the invention may broadly be said to consist in a mixing valve having a valve body and a movable valve member, the valve body having three ports, two inlet ports and one outlet port, and the valve member can be selectively positioned to restrict the flow through either or both of the inlet ports, wherein the outlet port of the valve body is adapted and configured to receive at least one flow mixing device according to claim 1.

Preferably the valve further includes at least one flow mixing device.

Preferably the valve includes at least one lug or recess that is adapted to engage with a corresponding recess or lug of the mixing device to present rotation of the mixing device in use.

Preferably the mixing device includes a flange which is adapted to engage with, or be retained by, a flange, or cutlet end, of the outlet port of the valve.

Preferably the outlet end of the outlet port is adapted to receive the flange of the mixing device.

Preferably the mixing device includes one or more vanes configured to induce swirl in a fluid passing through the outlet valve.

Preferably the mixing device includes two or more vanes, and each vane is configured to induce swirl in the same swirl direction.

Optionally the mixing device includes two vanes, a first vane configured to induce swirl in a clockwise direction and a second vane configured to induce swirl in an anticlockwise direction.

Preferably the valve body is adapted and configured to receive the mixing device into the free end of the outlet port.

Preferably the ports are generally arranged in a "T" shaped configuration.

Preferably the mixing valve includes a generally cylindrical shaped valve seat surface.

Preferably each of the inlet and outlet ports communicates with a respective opening in the valve seat surface.

Preferably the movable valve member includes a curved sealing surface which is configured to engage with, or move adjacent to, the valve seat surface.

Preferably the valve further includes a control device capable of receiving data relating to at least one parameter of a fluid that can exit the outlet port.

Preferably the control device is software configurable to allow any one of the ports of the valve to be selected as the outlet port and the other two ports to be used as inlet ports.

Preferably the valve further includes an actuator.

Preferably the actuator includes at least one stepping motor.

Preferably the valve member includes a movable seal which can be biased away from the body of the valve member.

In a third aspect, the invention may broadly be said to consist in a mixing valve having a valve body and a movable valve member, the valve body having three ports, wherein any one of the ports can be selected for use as the outlet port, and the other two ports can be used as inlet ports, and the valve member can be selectively positioned to restrict the flow through either or both of the inlet ports.

Preferably the mixing valve includes a generally cylindrical shaped valve seat surface.

Preferably each of the ports communicates with a respective opening in the valve seat surface.

Preferably the movable valve member includes a curved sealing surface which is configured to engage with, or move adjacent to, the valve seat surface.

Preferably the ports are generally arranged in a "T" shaped configuration.

Preferably the valve further includes a control device adapted to receive data relating to at least one parameter of a fluid that can exit the outlet port.

Preferably the control device is software configurable to allow any one of the ports to be selected as the outlet port and the other two ports to be used as inlet ports.

Preferably the valve further includes an actuator adapted to move the movable valve member.

Preferably the actuator includes at least one stepping motor.

Preferably at least one of the ports is adapted to receive a mixing device.

Preferably the valve includes at least one flow mixing device.

Preferably the valve includes at least one lug or recess within or adjacent to each port that is adapted to engage with a corresponding recess or lug of the mixing device to prevent rotation of the mixing device in use.

Preferably the mixing device includes a flange which is adapted to engage with, or be retained by, a flange, or outlet end, of any port of the valve.

Preferably the outlet end of each port is adapted to receive the flange of the mixing device.

Preferably the mixing device includes one or more vanes configured to induce swirl in a fluid passing through the outlet valve.

Optionally the mixing device includes two vanes, a first vane configured to induce swirl in a clockwise direction and a second vane configured to induce swirl in an anticlockwise direction.

Preferably the valve body is adapted and configured to receive the mixing device into the free end of any port.

Preferably the valve member includes a movable seal which can be biased away from the body of the valve member.

In a fourth aspect, the invention may broadly be said to consist in a divert valve having a valve body and a movable valve member, the valve body having three ports, wherein any one of the ports can be selected for use as the inlet port, and the other two ports can be outlet ports, and the valve member can be selectively positioned to restrict the flow through either or both of the outlet ports.

Preferably the valve member includes a movable seal which can be biased away from the body of the valve member.

Preferably the ports of the valve are generally arranged in a "T" shaped configuration.

Preferably the divert valve includes a generally cylindrical shaped valve seat surface.

Preferably each of the ports communicates with a respective opening in the valve seat surface.

Preferably the movable valve member includes a curved sealing surface which is configured to engage with, or move adjacent to, the valve seat surface.

Preferably the valve further includes a control device adapted to receive data relating to at least one parameter of a fluid that can exit either or both outlet ports.

Preferably the control device is software configurable to allow any one of the ports to be selected as the outlet port and the other two ports to be used as inlet ports.

Preferably the valve further includes an actuator.

Preferably the actuator includes at least one stepping motor.

In a fifth aspect, the invention may broadly be said to consist in an actuator controlled mixing or divert valve incorporating at least one mixing valve or divert valve as specified herein and a feedback sensor suitable for measuring at least one parameter of any fluid or fluids that exit the valve.

Preferably the feedback sensor is a temperature sensor.

The invention may also broadly be said to consist in the parts, elements and features referred to or indicated in the specification of the application, individually or collectively, and any or all combinations of any two or more of the parts, elements or features, and where specific integers are mentioned herein which have known equivalents, such equivalents are incorporated herein as if they were individually set forth

### DESCRIPTION

Further aspects of the present invention will become apparent from the following description which is given by way of example only and with reference to the accompanying drawings in which:
**FIGURE 1** is a perspective view of a mixing valve,
**FIGURE 2** is an exploded perspective view of the mixing valve,
**FIGURES 3** and 3a are perspective views of a mixing device,
**FIGURES 4** and 4a are cross sectional plan views showing a valve member in two positions, and
**FIGURE 5** is a side elevation view showing the mixing valve is a feedback control application.

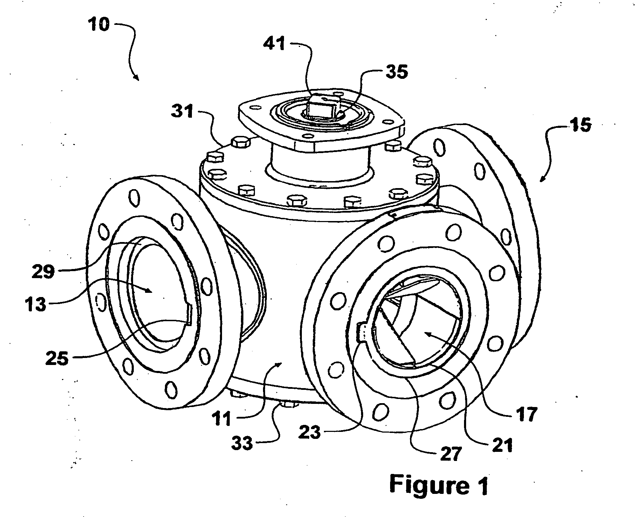

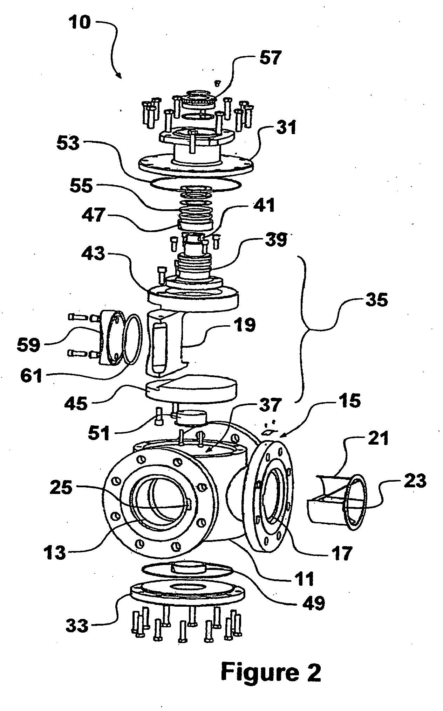

With reference to **Figures 1** and **2**, a mixing valve (10) is shown having a valve body (11) which includes three ports, a first port (13), a second port (15) and a third port (17). A movable valve member (19) can be used to restrict the flow through any of the ports, (13), (15) or (17). One of the features of this mixing valve (10) is the capability of any one of the ports, (13), (15) or (17) to be used as the outlet port, while the remaining two can be used as the inlet ports.

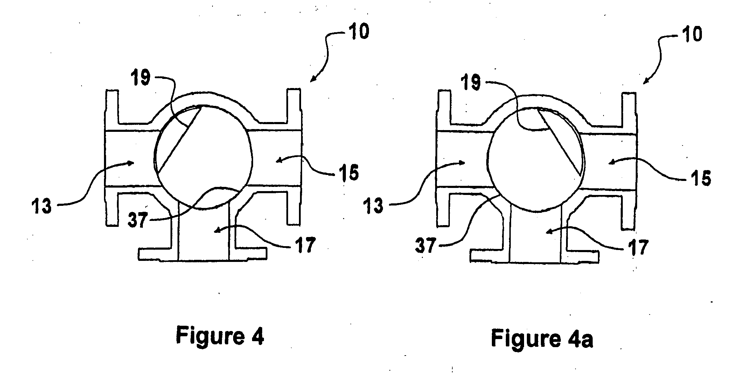

The operation of the mixing valve (10) and in particular the operation of the movable valve member (19) is shown and described in further detail below with reference to figures 4 and 4a below.

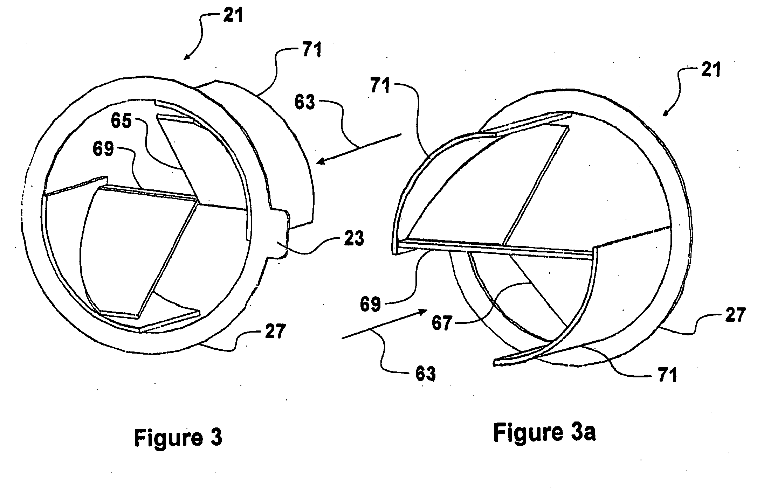

A mixing device (21) is shown fitted inside the third port (17) in figure 1, and is shown removed in figure 2. The mixing device is shown and described in further detail with reference to figures 3 and 3a below. The mixing device (21) can be fitted into any of the ports, (13), (15) or (17), allowing it to be used in whichever port that has been selected as the outlet port of the valve (10).

It can be seen that the mixing device (19) has a lug (23) which is sized and shaped to engage with a corresponding recess (25) at the outlet end or free end of each of the ports (13), (15) or (17). The engagement prevents the mixing device (19) rotating when fitted or mounted into a port. Optionally the lug could be part of the valve body (11) and the recess could be in the mixing device (19). In this example only a single lug (23) and recess (25) are shown, however in alternative configurations more than one lug (23) and recess (25) could be used. In a further variation the mixing device (19) could be positively engaged with the mixing valve (10) using one or more screws, rivets or other suitable mechanical fasteners, or a glue.

A flange (27) on the mixing device (21) is sized and configured to fit within a corresponding shallow bored recess (29) about the outlet end or free end of each of the ports (13), (15) and (17) of the valve body (11). When the valve (10) is bolted to a flange of a connecting pipe, the flange (27) of the mixing device (21) can be held securely between the body (11) of the valve (10) and the connecting pipe.

The valve body (11) can be configured in a number of ways, with the ports (13), (15) and (17) at a range of angles to one another, however, in many situations it is convenient to have the ports arranged to form a generally "T" shaped configuration, since this is compatible with the plumbing layouts of many industrial installations.

The valve (10) further includes a first cap (31) and a second cap (33) which can each be bolted to the valve body (11). These caps (31) and (33) can support a spindle assembly (35) which contains the movable valve member (19). The caps (31) and (33) can be bolted to the valve body (11) to close and seal it. The first cap (31) and the second cap (33) can each be fitted to either end of a main bore (37) of the valve body (11). This allows the valve (10) to be assembled in two configurations which can be advantageous. For example, to suit a particular installation, and to ensure that an actuator that may be used with the valve (10) is not situated below the valve body (11), the valve (10) can be configured to have the actuator on the side or top of the valve body (11), irrespective of the orientation of the valve body (11).

The main bore (37) provides a generally cylindrical shaped valve seat surface. Each of the ports (13) (15) and (17) communicates with a respective opening in the valve seat surface.

The spindle assembly (35) comprises a main shaft (39) having a square drive member (41) at one end that is designed to engage with an actuator, and which can be connected at its other end to a first crank member (43). The movable valve member (19) is supported on one end by the first crank member (43) and is supported on its other end by a second crank member (45). Both the first and the second crank members (43) and (45) are in the shape of circular disks and the facing surfaces of each disk (43) and (45) form part of the internal passageway through which fluids pass when they pass through the valve (10).

The main shaft (39) can be supported by a first bearing (47) that is fitted within the first cap (31). A short shaft (51) which can be fastened to the centre of the second crank member (45) can be used to support the other end of the spindle assembly (35) within a central bore in the second cap (33). A second bearing (49) can be used to reduce friction or wear between the shaft (51) and the central bore in the second cap (33). O rings, (53) and (55), or other suitable seals can be used to produce leak resistant seals between the caps (31) and (33), the main shaft (39) and the valve body (11).

A retainer nut (57) can be used to adjust or reduce end float of the spindle assembly (35) within the valve (10).

The movable valve member (19) has a curved sealing surface which is configured to engage with, or bear against, or move adjacent to the valve seat surface of the main bore (37) of the valve body (11). In some mixing or divert valve applications it is not necessary for the valve member (19) to bear against the valve seat surface where some internal leakage can be tolerated.

In this example, the curved sealing surface is on a separate seal (59) which forms part of the movable valve member (19). The seal (59) is adapted to engage with, or bear against, the main bore (37) of the valve body (11) to produce a useful seal between the movable valve member (19) and the main bore (37). This allows the movable valve member (19) to seal off any of the ports (13) (15) or (17) of the valve (10) if desired. The seal (59) can be any suitable material, for example a low friction plastics material, brass, or a ceramic material.

In this example the seal (59) can be bolted to the movable valve member (19), the joint being sealed by an O ring (61).

The O ring (61) can also be used as a resilient member to bias the seal (59) towards the main bore (37) for improved sealing and to compensate for wear or slight ovality of the bore (37) or for minor misalignment of the axis of rotation of the spindle assembly (35) relative to the principal axis of the main bore (37).

The seal (59) protrudes from a curved outer surface of the movable valve member (19). In use, the edges of the movable valve member (19) can be used to help to remove scale or other deposits from the main bore (37) to protect the seal (59), if this protrusion is kept small, for example, less than 1 millimetre.

With reference to **Figures 3** and **3a**, the mixing device (21) is shown in two further perspective views for further clarity. The outlet end of the mixing device (21) is shown in figure 3 and the inlet end of the device (21) is shown in figure 3a. A direction arrow (63) shows the preferred direction of fluid flow through the mixing device (21).

The mixing device (21) is shown having a first vane (65) and a second vane (67). Both vanes are configured to produce shear and swirl in a fluid that passes through the mixing device (21). The swirling action can increase the shearing action within the fluid flow to enhance mixing. Preferably the first vane (65) and the second vane (67) are both configured to induce swirl in the same swirl direction in a fluid passing through the mixing device (21).

Optionally the first vane (65) could be configured to produce swirl in a clockwise direction, while the second vane (67) is configured to produce swirl in an anticlockwise direction, for some mixing applications.

In this example, the vanes (63) and (67) are each supported on a cross member (69) and by curved shrouds (71). The cross member (69) essentially divides flow through the mixing device into two flow paths, one that is influenced primarily by the first vane (65) and another that is influenced primarily by the second vane (67).

The length of the mixing device (21) in the direction of the arrow (63) should be such that the device (21) can be housed entirely within the valve (10) to facilitate simple installation of the valve (10) into existing pipework.

The mixing device (21) could be configured in a number of ways, for example having one, or many vanes to suit a particular application. For example in an application involving a slower flowing and a more viscous fluid, many vanes arranged to produce a more complex mixing flow can be used.

With reference to **Figures 4** and **4a**, the valve (10) is shown in cross section with the valve member (19) shown in two different positions. The valve member (19) can be moved in a circular path by the spindle (35) to any position adjacent to the main bore (37). The mixing valve (10) works by positioning the valve member (19) so that it partially or completely restricts the flow of a fluid through either of the inlet ports. As mentioned above, the valve (10) can be configured such that any two of the ports (13), (15) or (17) can be the inlet ports, leaving the remaining port for use as an outlet port.

In figure 4 the valve member (19) is shown positioned to restrict flow through the first port (13) and in figure 4a the valve member (19) is shown positioned to restrict flow through the second port (15). Similarly the valve member (19) could be rotated further around the main bore (37) and be positioned to restrict flow through the third port (17).

In these figures the preferred "T" shape arrangement of the ports can be seen.

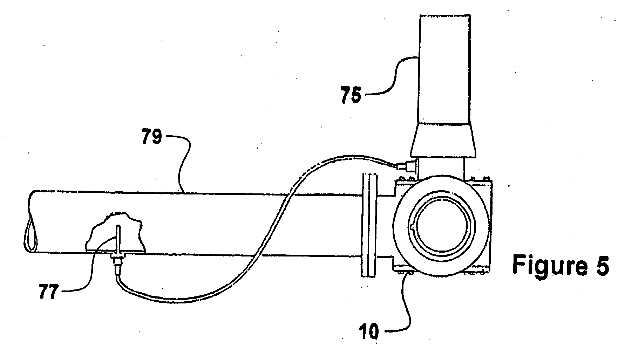

With reference to **Figure 5****,** the valve (10) is shown assembled with an actuator (75) and installed as part of a closed loop feedback control installation. The installation includes a feedback sensor (77) which can for example be a temperature or an acidity sensor. The feedback sensor is fitted into a pipe (79) that is connected to the outlet port of the valve (10).

It has generally been necessary to fit a feedback sensor at least about 10 to 12 pipe diameters away from prior art mixing valves to ensure that the sensor is within adequately mixed fluid to ensure accurate mixing control. However, testing has shown that when using a mixing valve that incorporates a mixing device as described herein, the feedback sensor (77) can be placed as close as 4 to 6 pipe diameters from the mixing valve (10) and still provide accurate feedback for mixing control. This reduction in distance from the mixing valve (10) to the sensor (77) means that transport lag can be reduced allowing faster response times to be achieved.

The inventors have found that a digital control device or system in combination with an actuator having a stepping motor is particularly suitable for use with the valve (10) for use in a feedback control installation, for example to supply mixed hot and cold water at a desired temperature.

Preferably the control device is software configurable to allow any one of the ports of the valve to be selected as the outlet port and the other two ports to be used as inlet ports.

### VARIATIONS

Aspects of the present invention have been described by way of example only and it should be appreciated that modifications and additions may be made thereto without departing from the scope thereof.

The above example has been described with reference to a mixing valve. It should be noted that the valve (14) could also be used as a divert valve, for example to divert more or less of a fluid flow to a heat exchanger system with the remainder of the flow being directed along a different path.

While the above example is described with reference to use with an actuator having a stepping motor, alternative actuators, for example a pneumatic or hydraulic actuator could be used.

### DEFINITIONS

Throughout this specification the word "comprise" and variations of that word, such as "comprises" and "comprising", are not intended to exclude other additives, components, integers or steps.

### ADVANTAGES

Thus it can be seen that at least the preferred form of the invention provides a mixing valve which can allow a feedback sensor to be positioned closer to the valve for more responsive control in a feedback control installation.

The valve can also be configured to suit existing pipework if necessary, since any of the ports can be used as inlet or outlet ports.

## Claims

1. An in-valve mountable mixing device (21), the device (21) being configured to fit within an outlet port of a mixing valve (10) and to positively engage with the mixing valve (10) to prevent rotation of the mixing device (21) within the valve (10) when mounted, and having more vanes (65, 67) adapted to induce swirl into a fluid passing through the outlet port, **characterised in that** the vanes (65, 67) are each supported on a cross member (69) and by curved shrouds (71), the cross member (69) divides flow through the mixing device (21) into two flow paths, one that is influenced primarily by a first vane (65) and another that is influenced by a second vane (67).

2. An in-valve mountable mixing device as claimed in claim 1, wherein the mixing device includes at least one lug or recess that is adapted to engage with at least one corresponding recess or lug of the valve to prevent rotation of the mixing device when mounted.

3. An in-valve mountable mixing device as claimed in claim 1 or claim 2, wherein the mixing device includes one or more vanes configured to induce swirl in a fluid passing through the outlet valve.

4. A mixing valve (10) having a valve body (11) and a movable valve member (19), the valve body (11) having three ports (13, 15, 17), two inlet ports and one outlet port, and the valve member (19) can be selectively positioned to restrict the flow through either or both of the inlet ports, wherein the outlet port of the valve body (11) is adapted and configured to receive at least one flow mixing device (21) according to claim 1.

5. A mixing valve (10) as claimed in claim 4 wherein the valve (10) includes at least one lug (23) or recess that is adapted to engage with a corresponding recess (25) or lug of the mixing device (21) to prevent rotation of the mixing device in use.

6. A mixing valve (10) as claimed in claim 5, wherein the mixing device (21) includes one of more vanes (65, 67) configured to induce swirl in a fluid passing through the outlet valve.

7. A mixing valve (10) as claimed in any one of claims 5 or 6, wherein the mixing device (21) includes two or more vanes (65, 67), and each vane (65, 67) is configured to induce swirl in the same swirl direction.

8. A mixing valve (10) as claimed in any one of claims 4 to 7, wherein the valve body (11) is adapted and configured to receive the mixing device (21) into the free end of the outlet port.

9. A mixing valve (10) as claimed in any one of claims 5 to 8, wherein the mixing device (21) includes a flange (27) which is adapted to engage with, or be retained by, a flange, or outlet end, of the outlet port of the valve.

10. A mixing valve (10) as claimed in claim 9, wherein the outlet end of the outlet port is adapted to receive the flange (27) of the mixing device (21).

## Patentansprüche

1. In einem Ventil befestigbare Mischvorrichtung (21), wobei die Vorrichtung (21) so konfiguriert ist, dass sie in eine Auslassöffnung eines Mischventils (10) passt und das Mischventil (10) formschlüssig in Eingriff nimmt, um nach der Befestigung eine Drehung der Mischvorrichtung (21) in dem Ventil (10) zu verhindern, und mit Flügeln (65, 67), die dazu ausgeführt sind, in einem durch die Auslassöffnung passierenden Fluid Wirbel zu erzeugen,
**dadurch gekennzeichnet, dass** die Flügel (65, 67) jeweils auf einem Querglied (69) und durch gekrümmte Verkleidungen (71) gestützt werden, wobei das Querglied (69) Strömung durch die Mischvorrichtung (21) in zwei Strömungswege unterteilt, in einen, der in erster Linie durch einen ersten Flügel (65) beeinflusst wird, und einen, der durch einen zweiten Flügel (67) beeinflusst wird.

2. In einem Ventil befestigbare Mischvorrichtung nach Anspruch 1, wobei die Mischvorrichtung mindestens einen Ansatz oder eine Aussparung enthält, der bzw. die dazu ausgeführt ist, mit mindestens einer bzw. einem entsprechenden Aussparung oder Ansatz des Ventils in Eingriff zu gelangen, um nach Befestigung eine Drehung der Mischvorrichtung zu verhindern.

3. In einem Ventil befestigbare Mischvorrichtung nach Anspruch 1 oder 2, wobei die Mischvorrichtung einen oder mehrere Flügel enthält, die dazu konfiguriert sind, in einem durch das Auslassventil passierenden Fluid Wirbel zu erzeugen.

4. Mischventil (10) mit einem Ventilkörper (11) und einem beweglichen Ventilglied (19), wobei der Ventilkörper (11) drei Öffnungen (13, 15, 17), zwei Einlassöffnungen und eine Auslassöffnung, aufweist und das Ventilglied (19) gezielt positioniert werden kann, um die Strömung durch eine oder beide der Einlassöffnungen zu drosseln, wobei die Auslassöffnung des Ventilkörpers (11) dazu ausgeführt und konfiguriert ist, mindestens eine Strömungsmischvorrichtung (21) nach Anspruch 1 aufzunehmen.

5. Mischventil (10) nach Anspruch 4, wobei das Ventil (10) mindestens einen Ansatz (23) oder eine Aussparung enthält, der bzw. die dazu ausgeführt ist, mit einer bzw. einem entsprechenden Aussparung oder Ansatz (25) der Mischvorrichtung (21) in Eingriff zu gelangen, um im Gebrauch eine Drehung der Mischvorrichtung zu verhindern.

6. Mischventil (10) nach Anspruch 5, wobei die Mischvorrichtung (21) einen oder mehrere Flügel (65, 67) enthält, die dazu konfiguriert sind, in einem durch das Auslassventil passierenden Fluid Wirbel zu erzeugen.

7. Mischventil (10) nach Anspruch 5 oder 6, wobei die Mischvorrichtung (21) zwei oder mehr Flügel (65, 67) enthält, die dazu konfiguriert sind, Wirbel in der gleichen Wirbelrichtung zu erzeugen.

8. Mischventil (10) nach einem der Ansprüche 4 bis 7, wobei der Ventilkörper (11) dazu ausgeführt und konfiguriert ist, die Mischvorrichtung (21) in dem freien Ende der Auslassöffnung aufzunehmen.

9. Mischventil (10) nach einem der Ansprüche 5 bis 8, wobei die Mischvorrichtung (21) einen Flansch (27) enthält, der dazu ausgeführt ist, mit einem Flansch oder einem Auslassende der Auslassöffnung des Ventils in Eingriff zu gelangen oder davon festgehalten zu werden.

10. Mischventil (10) nach Anspruch 9, wobei das Auslassende der Auslassöffnung dazu ausgeführt ist, den Flansch (27) der Mischvorrichtung (21) aufzunehmen.

## Revendications

1. Dispositif de mélange (21) pouvant être monté dans une vanne, le dispositif (21) étant configuré pour s'ajuster dans un orifice de sortie d'une vanne de mélange (10), et pour venir en prise par engagement positif avec la vanne de mélange (10) pour empêcher la rotation du dispositif de mélange (21) dans la vanne (10) lorsqu'il est monté, et ayant plusieurs ailettes (65, 67) prévues pour induire un tourbillonnement dans un fluide traversant l'orifice de sortie,
**caractérisé en ce que** les ailettes (65, 67) sont chacune supportées sur une traverse (69) et par des enveloppes courbes (71), la traverse (69) divisant l'écoulement à travers le dispositif de mélange (21) en deux chemins d'écoulement, un qui est influencé principalement par une première ailette (65), et un autre qui est influencé par une deuxième ailette (67).

2. Dispositif de mélange pouvant être monté dans une vanne, selon la revendication 1, dans lequel le dispositif de mélange comporte au moins une oreille ou un retrait qui est prévu pour s'engager avec au moins un retrait ou une oreille correspondant de la vanne pour empêcher la rotation du dispositif de mélange lorsqu'il est monté.

3. Dispositif de mélange pouvant être monté dans une vanne, selon la revendication 1 ou 2, dans lequel le dispositif de mélange comporte une ou plusieurs ailettes configurées pour induire un tourbillonnement dans un fluide passant à travers la vanne de sortie.

4. Vanne de mélange (10) ayant un corps de vanne (11) et un organe de vanne mobile (19), le corps de vanne (11) ayant trois orifices (13, 15, 17), deux orifices d'entrée et un orifice de sortie, et l'organe de vanne (19) pouvant être positionné de manière sélective pour limiter l'écoulement à travers l'un ou l'autre ou les deux orifices d'entrée, l'orifice de sortie du corps de vanne (11) étant prévu et configuré pour recevoir au moins un dispositif de mélange d'écoulement (21) selon la revendication 1.

5. Vanne de mélange (10) selon la revendication 4, dans laquelle la vanne (10) comporte au moins une oreille (23) ou un retrait qui est prévu pour s'engager avec un retrait (25) correspondant ou une oreille du dispositif de mélange (21) pour empêcher la rotation du dispositif de mélange pendant l'utilisation.

6. Vanne de mélange (10) selon la revendication 5, dans laquelle le dispositif de mélange (21) comporte une ou plusieurs ailettes (65, 67) configurées de manière à induire un tourbillonnement dans un fluide passant à travers la vanne de sortie.

7. Vanne de mélange (10) selon l'une quelconque des revendications 5 ou 6, dans laquelle le dispositif de mélange (21) comporte deux ailettes ou plus (65, 67) et chaque ailette (65, 67) est configurée de manière à induire un tourbillonnement dans la même direction de tourbillonnement.

8. Vanne de mélange (10) selon l'une quelconque des revendications 4 à 7, dans laquelle le corps de vanne (11) est prévu et configuré pour recevoir le dispositif de mélange (21) dans l'extrémité libre de l'orifice de sortie.

9. Vanne de mélange (10) selon l'une quelconque des revendications 5 à 8, dans laquelle le dispositif de mélange (21) comporte une bride (27) qui est prévue pour s'engager avec, ou être retenue par, une bride ou une extrémité de sortie, de l'orifice de sortie de la vanne.

10. Vanne de mélange (10) selon la revendication 9, dans laquelle l'extrémité de sortie de l'orifice de sortie est prévue pour recevoir la bride (27) du dispositif de mélange (21).
